# FASCICULE DE BREVET EUROPEEN

(11) **EP 4 416 418 B1**
(45) Date de publication et mention de la délivrance du brevet: **30.07.2025**
(21) Numéro de dépôt: 22777271.2
(22) Date de dépôt: 30.09.2022
(51) Int. Cl.: F16L 37/092

(54) **DISPOSITIF DE RACCORDEMENT D'UN TUBE**
KUPPLUNGSVORRICHTUNG FÜR EIN ROHR
COUPLING DEVICE FOR A TUBE

(30) Priorité: 15.10.2021 FR 2110989
(43) Date de publication de la demande: 21.08.2024
(73) Titulaire: A. Raymond et Cie, 38000 Grenoble (FR)
(72) Inventeur: GUIBERT, Kévin, 38000 GRENOBLE (FR); CHAUPIN, Jérôme, 38830 CRET EN BELLEDONNE (FR)
(74) Mandataire: IP Trust
(86) Numéro de dépôt international: PCT/EP2022/077281
(87) Numéro de publication internationale: WO 2023/061772

(56) Documents cités:
- WO-A1-2021/148737
- JP-A- H0 735 281

## Description

### DOMAINE DE L'INVENTION

La présente invention se rapporte au domaine des dispositifs de raccordement fluidique mis en œuvre dans les systèmes de circulation et/ou de distribution de fluides.

Plus particulièrement, la présente invention concerne un dispositif de raccordement d'un tube et pourvu de moyens permettant de vérifier le bon état de connexion du tube au dispositif de raccordement. Notamment, la présente invention propose un dispositif de raccordement d'un tube et pourvu d'un témoin haptique de bonne connexion.

### ARRIERE PLAN TECHNOLOGIQUE DE L'INVENTION

Les dispositifs de raccordement fluidique sont aujourd'hui largement répandus dans les véhicules automobiles et les véhicules de transport routier. Ces dispositifs de raccordement fluidique sont notamment mis en œuvre pour assurer la circulation et/ou la distribution d'un fluide au sein de ces véhicules.

Par ailleurs, afin d'assurer des cadences d'assemblage compatibles avec les exigences des industries automobile et/ou des véhicules de transport routier, il peut être requis de disposer de dispositifs de raccordement fluidique permettant des connexions rapides et de moyens de vérification de leur montage.

A cet égard, le document [1] cité à la fin de la description divulgue un dispositif de raccordement permettant la connexion fluidique d'un tube ou d'un conduit, et qui comprend un témoin de montage visuel.

Notamment, ce dispositif de raccordement comprend un corps creux sensiblement cylindrique et présentant un logement d'accueil débouchant sur une ouverture d'insertion. Une bague d'accrochage ainsi qu'un joint d'étanchéité sont par ailleurs disposés dans le logement d'accueil et agencés pour assujettir un tube inséré dans le logement d'accueil par l'ouverture d'insertion et selon un sens d'insertion.

Le dispositif de raccordement comprend également une cartouche susceptible d'être verrouillée dans l'une ou l'autre d'une première et d'une deuxième position dans le logement d'accueil. La cartouche initialement verrouillée dans la première position dépasse en partie du logement d'accueil par l'ouverture d'insertion. L'insertion d'une longueur prédéterminée dans le logement d'accueil, selon le sens d'insertion, permet le déverrouillage de la cartouche et son coulissement de la première position vers la deuxième position dans laquelle ladite cartouche se trouve entièrement intégrée dans le logement d'accueil.

L'insertion complète de la cartouche dans le logement d'accueil permet de conclure à la bonne connexion du tube avec le dispositif de raccordement. Il est toutefois des situations pour lesquelles les conditions d'illumination et/ou l'exiguïté des zones de raccordement sur les véhicules empêchent l'observation de la position de la cartouche et rendent ainsi inefficiente la fonction de témoin visuel de ladite cartouche.

De manière alternative, il a pu être envisagé de pourvoir le dispositif de raccordement d'un témoin sonore. Le document [2] cité à la fin de la description en divulgue un exemple. En particulier, le dispositif de raccordement décrit dans ce document comprend un témoin sonore formé par une épingle élastique configurée pour tressauter dès lors qu'une longueur prédéterminée du tube est enfoncée dans le dispositif de raccordement. Cependant, un environnement bruyant rend la détection sonore difficile.

Toujours de manière alternative, le document [3] cité à la fin de la description divulgue un dispositif de raccordement qui comprend un témoin haptique de bon montage du tube. Le dispositif de raccordement décrit dans ce document est pourvu, dans un canal intérieur, d'une butée contre laquelle le tube exerce une force jusqu'à la rupture de la butée, signe du bon enfoncement du tube. Toutefois, la rupture de la butée empêche toute vérification ultérieure du bon montage du tube dans le canal intérieur.

Le document [4] cité à la fin de la description divulgue un joint de tube de type enfichable qui peut être connecté à un tube de raccordement en insérant simplement le tube de raccordement dans un corps principal.

Un but de la présente invention est donc de proposer un dispositif de raccordement configuré pour permettre la bonne connexion d'un tube dans des environnements bruyants, obscures et/ou exigus.

Un autre but de la présente invention est de proposer un dispositif de raccordement pourvu d'un témoin de bon montage d'un tube susceptible d'être activé autant de fois que nécessaire.

### BREVE DESCRIPTION DE L'INVENTION

La présente invention concerne un dispositif de raccordement d'un tube, selon la revendication 1.

Le dispositif comprend:
- un corps creux définissant un logement qui comprend une ouverture par laquelle un tube est destiné à être inséré par coulissement selon un sens d'insertion ;
- une bague d'accrochage disposée dans le logement coaxialement au sens d'insertion et destinée à être en prise avec un tube inséré dans le logement ;
- une première butée disposée dans le logement et en amont de la bague d'accrochage selon le sens d'insertion, et contre laquelle ladite bague est susceptible de buter ;
- une cartouche contre laquelle le tube, inséré d'une longueur prédéterminée et en prise avec la bague d'accrochage, est destiné à buter afin d'imposer à ladite cartouche un état de connexion, la cartouche dans l'état de connexion étant susceptible de coulisser entre une première et une deuxième position afin d'accompagner le coulissement du tube en prise avec la bague d'accrochage, le passage de la cartouche de la deuxième vers la première position imposant au tube de coulisser selon un sens d'extraction, opposé au sens d'insertion, afin de mettre en butée la bague d'accrochage contre la première butée, tandis que le passage de la cartouche de la première vers la deuxième position autorise un coulissement du tube selon le sens d'insertion afin de mettre la bague d'accrochage à distance de la première butée ;
- un ressort exerçant un effort contre la cartouche selon le sens d'extraction afin d'imposer à la cartouche, dans l'état de connexion, d'adopter sa première position.

Le logement est délimité par une surface interne du corps creux, et qui présente une symétrie de révolution autour d'un axe principal parallèle au sens d'insertion.

La cartouche comprend un manchon qui s'étend à partir d'une extrémité libre dans le sens d'insertion, et qui est destiné à assurer le guidage du tube lors de l'insertion de ce dernier dans le logement.

La est susceptible d'être maintenue, par au moins un moyen de verrouillage du dispositif de raccordement, dans un état, dit état verrouillé, et dans lequel tout coulissement de la cartouche vers la deuxième position est interdit, le passage de l'état verrouillé vers l'état de connexion étant induit par l'insertion, selon le sens d'insertion, d'une longueur de tube égale à la longueur prédéterminée.

Selon un mode de mise en œuvre, le moyen de verrouillage comprend une deuxième butée et un levier flexible, la deuxième butée étant formée sur la surface interne, tandis que le levier flexible, porté par le manchon, s'étend de manière divergente par rapport au manchon et comprend une extrémité, dite extrémité de blocage, destinée à buter contre la deuxième butée lorsque la cartouche est dans l'état verrouillé, le levier flexible est par ailleurs configuré pour fléchir de manière convergente intérieurement au manchon lors de l'insertion du tube afin de positionner l'extrémité de blocage en retrait de la deuxième butée.

Selon un mode de mise en œuvre, le manchon comprend une butée terminale, opposée à son extrémité libre, contre laquelle le tube est destiné buter dès lors qu'il est inséré dans le logement d'une longueur au moins égale à la longueur prédéterminée.

Selon un mode de mise en œuvre, la cartouche comprend une chemise mécaniquement solidaire du manchon par une extrémité dudit manchon opposée à l'extrémité libre, la chemise comprenant une collerette contre laquelle le ressort exerce son effort sur ladite cartouche.

Selon un mode de mise en œuvre, la cartouche comprend un ergot qui lorsque ladite cartouche est dans l'état verrouillé se trouve dans une fente de la bague d'accrochage afin de lui imposer une contrainte se traduisant par un écartement supérieur à un écartement à l'état libre de ladite bague d'accrochage.

Selon un mode de mise en œuvre, un anneau cache poussière est disposé dans l'ouverture, et en amont de la première butée selon le sens d'insertion, avantageusement l'anneau cache poussière est en prise avec le corps creux par encliquetage.

Selon un mode de mise en œuvre, un joint torique est disposé dans le logement en amont de la première butée selon la sens d'insertion, l'anneau cache poussière coiffant ledit joint torique.

Selon un mode de mise en œuvre, la première butée forme un anneau au moins partiellement encastré dans l'anneau cache poussière.

Selon un mode de mise en œuvre, un autre joint torique est également disposé en aval de la bague d'accrochage selon le sens d'insertion.

Selon un mode de mise en œuvre, la surface interne du corps creux comprend un épaulement de butée contre lequel le ressort est en appui.

### Brève description des dessins

D'autres caractéristiques et avantages de l'invention ressortiront de la description détaillée qui va suivre en référence aux figures annexées sur lesquelles :
[Fig.1] La [Fig.1] est une représentation schématique d'un dispositif de raccordement conforme à un exemple de réalisation de la présente invention, notamment, la [Fig.1] représente le dispositif de raccordement selon un plan de coupe passant par l'axe principal AA' dudit dispositif de raccordement ;
[Fig.2] La [Fig.2] est une représentation schématique du corps creux mis en œuvre dans l'exemple de la [Fig.1] et selon une vue en perspective permettant d'observer l'ouverture par laquelle le tube est destiné à être inséré ;
[Fig.3] La [Fig.3] est une illustration du dispositif de raccordement de la [Fig.1] selon le plan de coupe passant par l'axe principal AA', et dans lequel une longueur de tube, inférieure à la longueur prédéterminée, est insérée dans le logement par l'ouverture et selon le sens d'insertion ;
[Fig.4] La [Fig.4] est une illustration du dispositif de raccordement de la [Fig.1] selon le plan de coupe passant par l'axe principal AA', et dans lequel une longueur de tube, égale à la longueur prédéterminée, est insérée dans le logement par l'ouverture et selon le sens d'insertion, la cartouche, dans son état de connexion, adoptant sa première position ;
[Fig.5] La [Fig.5] est une illustration du dispositif de raccordement de la [Fig.1] selon le plan de coupe passant par l'axe principal AA', et dans lequel une longueur de tube, égale à la longueur prédéterminée, est insérée dans le logement par l'ouverture et selon le sens d'insertion, la cartouche, dans son état de connexion, adoptant sa deuxième position ;
[Fig.6] La [Fig.6] est une représentation schématique d'une cartouche selon un plan de coupe passant par l'axe principal AA' et susceptible d'être mis en œuvre dans le dispositif de raccordement conforme à la présente invention ;
[Fig.7] La [Fig.7] est une représentation schématique en perspective d'une cartouche comprenant un ergot imposant un écartement à la bague d'accrochage ;
[Fig.8] La [Fig.8] est une représentation schématique d'un dispositif de raccordement conforme à un autre exemple de réalisation qui n'est pas couvert par le texte des revendications, notamment, la [Fig.8] représente le dispositif de raccordement selon un plan de coupe passant par l'axe principal AA' dudit dispositif de raccordement ;
[Fig.9] La [Fig.9] est une représentation schématique d'une cartouche selon un plan de coupe passant par l'axe principal AA' du dispositif de raccordement selon l'autre exemple de réalisation;
[Fig.10] La [Fig.10] est une représentation schématique d'un dispositif de raccordement conforme à l'autre exemple de réalisation, notamment, la [Fig.10] représente le dispositif de raccordement selon un plan de coupe passant par l'axe principal AA' dudit dispositif de raccordement et dans l'état connecté.

### DESCRIPTION DETAILLEE DE L'INVENTION

La présente invention concerne un dispositif de raccordement destiné à assurer un raccordement fluidique, et avantageusement étanche, entre un tube ou un conduit et un élément femelle (non représenté sur les figures). Ce raccordement peut notamment être mis en œuvre dans un système d'écoulement et/ou de distribution de fluide (par exemple un liquide tel que de l'eau ou de l'huile, ou un gaz, ou de l'air) dans le domaine automobile, notamment dans les voitures ou tout autre type de véhicule commercial tel qu'un autocar, un camion, une remorque. L'invention n'est toutefois pas limitée à ces seuls domaines, et peut également être mise en œuvre dans les domaines ferroviaire et/ou aéronautique.

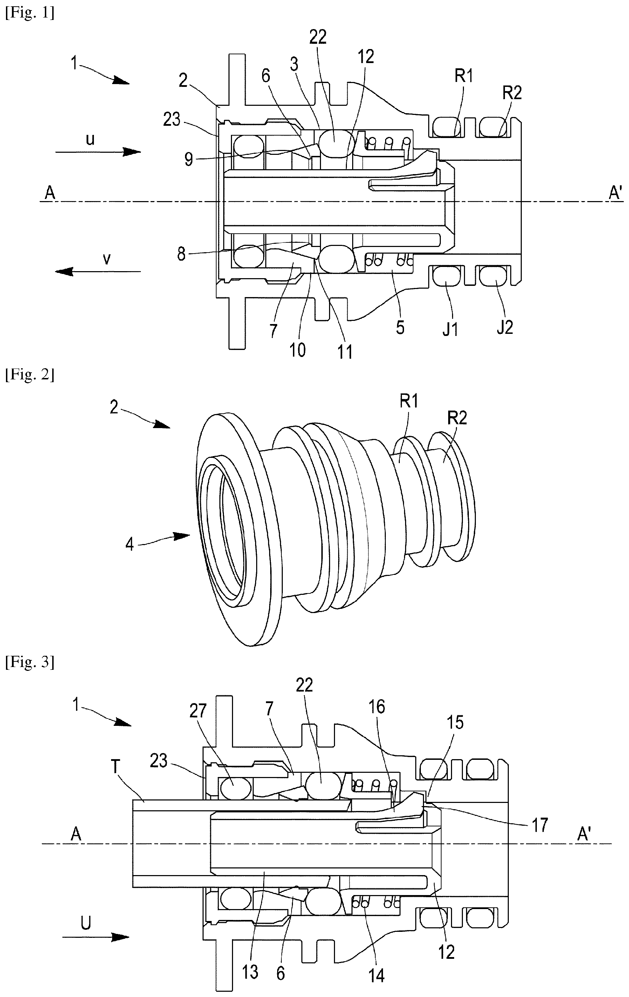

A la [Fig.1], on peut voir un dispositif de raccordement 1 selon un exemple de réalisation de la présente invention. Les principes exposés ci-après ne sont pas limités au seul agencement illustré dans cet exemple. Notamment, l'homme du métier, sur la base de ce qui suit, pourra envisager d'autres configurations. En particulier, le dispositif de raccordement 1 selon cet exemple de réalisation est représenté selon un plan de coupe passant par un axe, dit axe principal AA' dudit dispositif de raccordement 1.

Notamment, le dispositif de raccordement 1 comprend un corps creux 2 qui présente un logement 3 débouchant par une ouverture 4 ([Fig.2]). L'ouverture 4 permet notamment l'insertion d'un tube selon un sens d'insertion u porté par la direction définie par l'axe principal AA'. Le logement 3 est délimité par une surface interne 5 du corps creux 2 et qui présente une symétrie de révolution autour de l'axe principal AA'.

La surface extérieure du corps creux 2 peut comprendre une ou plusieurs rainures circonférentielles R1, R2 destinées à accueillir un ou plusieurs joints toriques J1, J2 permettant d'assurer une jonction étanche avec un élément femelle.

Le dispositif de raccordement 1 comprend un bague d'accrochage 6 et une première butée 7 permettant d'assujettir un tube susceptible d'être inséré dans le logement selon le sens d'insertion u. Plus particulièrement, la bague d'accrochage 6 et la première butée 7 sont agencées pour empêcher l'extraction du tube dès lors que ce dernier est inséré dans le logement 3 et se trouve en prise avec ladite bague d'accrochage 6.

A cet égard, la bague d'accrochage 6 peut être pourvue de moyens d'accroche lui permettant d'être en prise avec le tube. Plus particulièrement, la bague d'accrochage 6 peut présenter une section intérieure 8 effilée permettant de griffer la surface extérieure du tube, et ainsi être en prise avec ce dernier.

Par « en prise », on entend deux éléments mécaniquement solidaires l'un de l'autre. L'expression « en prise » présente également une nature réciproque de sorte qu'un premier élément en prise avec un deuxième élément implique que le deuxième élément est en prise avec le premier élément. Ainsi, et tout au long de la description, dès lors que la bague d'accrochage est en prise avec le tube implique que le tube est en prise avec la bague d'accrochage.

La première butée 7, pour sa part, est disposée en amont de la bague d'accrochage 6 selon le sens d'insertion u de manière à constituer un obstacle contre lequel la bague d'accrochage 6 est susceptible de buter. De manière particulièrement avantageuse, la première butée 7 peut être formée par un anneau dont l'axe de révolution est confondu avec l'axe principal AA', et se trouve en liaison fixe dans le logement 3 du corps creux 2.

Ainsi, un effort d'extraction, selon un sens d'extraction v (opposé au sens d'insertion u), sur un tube avec lequel la bague d'accrochage 6 est en prise, positionnera cette dernière en butée contre la première butée 7 et empêchera ainsi le retrait du tube.

Toujours de manière avantageuse, la première butée 7 peut également comprendre une surface interne 9, opposée à sa surface périphérique 10, présentant un forme tronconique divergente selon le sens d'insertion u. Ce dernier aspect permet de contraindre la bague d'accrochage 6 contre le tube lors de l'application d'un effort d'extraction. De manière complémentaire, la bague d'accrochage 6 peut comprendre une surface périphérique 11 qui présente également une forme tronconique divergente selon le sens d'insertion u. Cet aspect a pour effet de renforcer l'effet de contrainte imposé par la première butée 7 sur la bague d'accrochage 6 dès lors qu'un effort d'extraction est exercé sur un tube en prise avec ladite bague d'accrochage 6.

Par « surface tronconique divergente selon le sens d'insertion u », on entend un forme qui s'élargit selon le sens d'insertion u.

Le dispositif de raccordement 1 selon la présente invention comprend également une cartouche 12.

En particulier, la cartouche 12 est disposée dans le logement 3 et est susceptible d'adopter un état dit état de connexion. L'état de connexion est notamment imposé à la cartouche 12 dès lors qu'une longueur prédéterminée D de tube est insérée dans le logement 3 selon le sens d'insertion u, et se trouve par une de ses extrémités, dite extrémité d'insertion E, en butée contre la cartouche 12.

La cartouche 12 comprend un manchon 13 qui s'étend à partir d'une extrémité libre 12a selon le sens d'insertion u.

La [Fig.3] est une illustration du dispositif de raccordement 1 et dans lequel une longueur de tube T inférieure à la longueur prédéterminée est insérée dans le logement par l'ouverture 5 et selon le sens d'insertion. Sur cette [Fig.3], la bague d'accrochage 7 se trouve en prise avec le tube T. En d'autres termes, l'extrémité d'insertion E du tube T est en aval de la bague d'accrochage 6 selon le sens d'insertion u. Toutefois, dans la mesure où la longueur de tube T insérée reste inférieure à la longueur prédéterminée D, ledit tube T n'est pas en buté contre la cartouche 12.

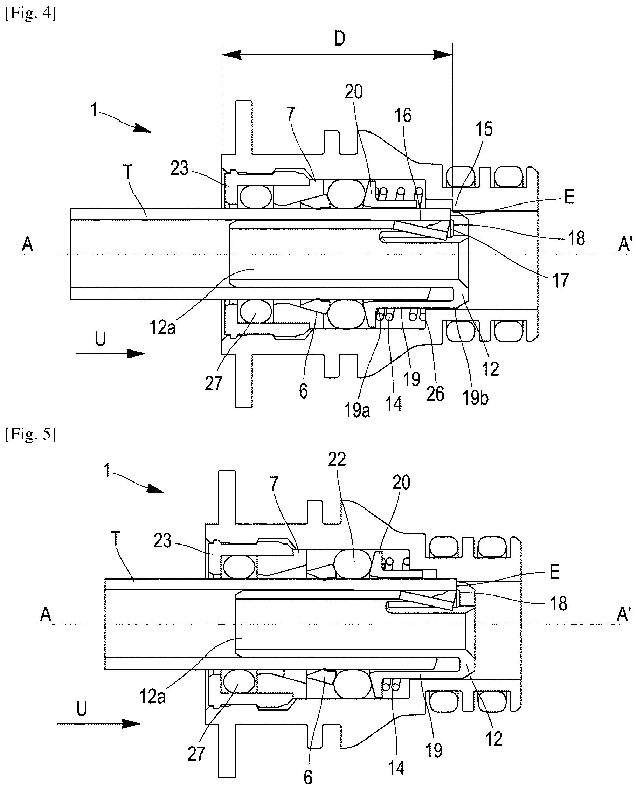

La [Fig.4], illustre un stade ultérieur d'insertion du tube T dans le logement 3 selon le sens d'insertion. Notamment, la [Fig.4] est une illustration du dispositif de raccordement 1 de la [Fig.3] et dans lequel la longueur prédéterminée D du tube T est insérée dans le logement 3 selon le sens d'insertion u. à ce stade d'insertion, le tube T est en butée par son extrémité d'insertion contre la cartouche 12 et est en prise avec la bague d'accrochage 6.

Selon la présente invention, la cartouche 12, dans son état de connexion, est susceptible de coulisser selon l'un ou l'autre du sens d'insertion et du sens d'extraction, entre une première position et une deuxième position afin d'accompagner le coulissement du tube en prise avec la bague d'accrochage 6. Par « accompagner le coulissement », on entend un mouvement d'ensemble dans le même sens du tube, de la bague d'accrochage et de la cartouche 12.

En d'autres termes, le coulissement de la cartouche 12 selon l'un ou l'autre du sens d'insertion u ou du sens d'extraction v sur une distance donnée peut s'accompagner du même mouvement du tube T et de la bague d'accrochage 6.

A cet égard, la première position est une position amont de la deuxième position selon le sens d'insertion u, et pour laquelle la bague d'accrochage 6 se trouve en butée contre la première butée 7 (cet aspect est notamment illustré à la [Fig.4]).

Tel qu'illustré à la [Fig.5], la cartouche 12, dès lors qu'elle se trouve dans l'état de connexion, peut coulisser, selon le sens d'insertion u, à partir de la première position vers la deuxième position. Ce coulissement de la première position vers la deuxième position peut par exemple être induit par un effort exercé par le tube T, selon le sens d'insertion u, en butée contre la cartouche 12. En d'autres termes, le coulissement de la cartouche 12, de la première vers la deuxième position, s'accompagne d'un mouvement d'ensemble du tube, de la bague d'accrochage et de la cartouche. Par ailleurs, ce mouvement d'ensemble positionne la bague d'accrochage 6 à distance de la première butée 7.

Le dispositif de raccordement 1 selon la présente invention comprend en outre un ressort 14 agencé pour exercer un effort contre la cartouche 12 selon le sens d'extraction v afin d'imposer à ladite cartouche 12, dans l'état de connexion, d'adopter sa première position.

En d'autres termes, le ressort 14, tel qu'agencé, permet de rendre solidaire le mouvement du tube T, de la bague d'accrochage 6 et de la cartouche 12. Notamment, par défaut, la cartouche 12 se trouve dans sa première position sous l'effet de l'effort exercé par le ressort 14 et impose donc à la bague d'accrochage 6 d'être en butée contre la première butée 7. A contrario, un effort exercé sur le tube T selon le sens d'insertion u provoque un coulissement d'ensemble du tube T, de la bague d'accrochage 6 et de la cartouche 12. Un relâchement de cet effort rétablira la cartouche 12 dans sa première position et positionnera ainsi la bague d'accrochage 6 en butée contre la première butée 7.

Ainsi, dès lors que la cartouche 12 est dans l'état de connexion, l'ensemble formé par le tube T, la bague d'accrochage 6 et la cartouche 12 peut se voir imposer des mouvements de va et vient selon la direction définie par l'axe principal AA'. En d'autres termes, un opérateur souhaitant vérifier la bonne connexion du tube T au dispositif de raccordement 1 pourra exercer un effort selon le sens d'insertion u sur le tube T afin de faire coulisser la cartouche de sa première position vers sa deuxième position. Un relâchement de cet effort rétablira la cartouche 12 dans sa première position sous l'effet du ressort 14. Cette séquence révèlera d'une part une insertion de la longueur prédéterminée D du tube T dans le dispositif de raccordement et, d'autre part l'effet de prise avec la bague d'accrochage.

Cette opération, exercée manuellement peut être exécutée dans des endroits exigus, non éclairés et/ou bruyants, permet ainsi de vérifier de manière efficace et sans ambiguïté la bonne connexion du tube dans le dispositif de raccordement.

Le dispositif de raccordement 1 comprend un moyen de verrouillage. Notamment, le moyen de verrouillage peut être agencé pour maintenir la cartouche 12 dans un état, dit état verrouillé, dans lequel tout coulissement de ladite cartouche 12 vers la deuxième position est interdit. Plus particulièrement, le moyen de verrouillage peut être agencé pour coopérer avec le tube T afin de permettre à la cartouche 12 de passer de l'état verrouillé vers l'état de connexion.

En particulier, la passage de la cartouche 12 de l'état verrouillé vers l'état de connexion peut être induit par l'insertion d'une longueur de tube T égale à la longueur prédéterminée.

Ainsi, et tel qu'illustrée à la [Fig.3], le moyen de verrouillage comprend une deuxième butée 15 et un levier flexible 16. Plus particulièrement, la deuxième butée 15 est formée sur la surface interne 5, tandis que le levier flexible 16, porté par le manchon 13, s'étend de manière divergente par rapport au manchon 13 et comprend une extrémité, dite extrémité de blocage 17, destinée à buter contre la deuxième butée lorsque la cartouche 12 est dans l'état verrouillé.

Le levier flexible 16 est par ailleurs configuré pour fléchir de manière convergente intérieurement au manchon 13 lors de l'insertion du tube T afin de positionner l'extrémité de blocage en retrait de la deuxième butée 15. Notamment, le dispositif de raccordement 1 est agencé de sorte que la flexion du levier flexible 16 n'intervienne que lorsqu'une longueur de tube T égale à la longueur prédéterminée est insérée dans le logement.

A cet égard, et tel qu'illustré à la [Fig.3], la longueur de tube T inséré dans le logement est inférieure à la longueur prédéterminée, de sorte que ledit tube T n'exerce aucun effort sur le levier flexible 16. Sur cette figure, le levier flexible 16 reste en butée contre la deuxième butée 15 et impose à la cartouche 12 son état verrouillé.

A la [Fig.4], la longueur de tube T insérée dans le logement est égale à la longueur prédéterminée de sorte que ledit tube exerce un effort sur le levier flexible 16 de manière à faire fléchir ce dernier afin de placer l'extrémité de blocage 17 en retrait de la deuxième butée 15. La flexion du levier flexible 16 permet ainsi d'imposer à la cartouche 12 son état de connexion.

De manière avantageuse, le manchon 13 comprend une butée terminale 18, opposée à son extrémité libre 12a, contre laquelle le tube T est destiné à buter dès lors qu'il est inséré dans le logement d'une longueur au moins égale à la longueur prédéterminée.

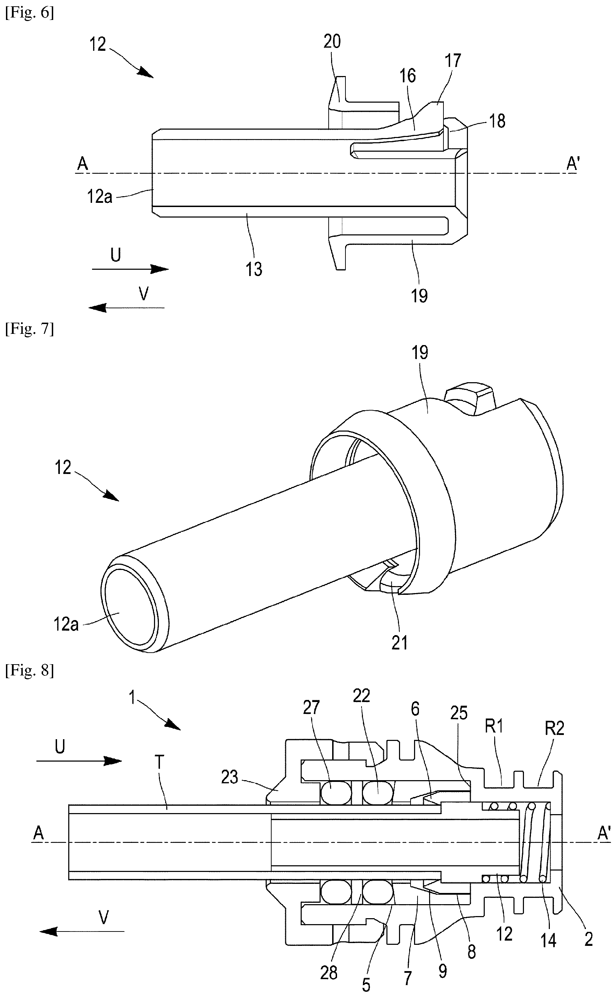

Toujours selon ce mode de réalisation particulier, la cartouche 12 (également illustrée à la [Fig.6]) comprend une chemise 19 mécaniquement solidaire du manchon par une extrémité dudit manchon opposée à l'extrémité libre 12a, et qui comprend par ailleurs une collerette 20 contre laquelle le ressort 14 exerce son effort sur ladite cartouche 12. Plus particulièrement, la chemise 19 est agencée extérieurement et de manière coaxiale au manchon 13. Il est entendu que la chemise 19 présente une forme de tube qui s'étend, selon le sens d'insertion, entre une première extrémité 19a et une deuxième extrémité 19b, la collerette étant disposée sur la première extrémité 19a ( [Fig.4]).

Selon cet exemple de réalisation, le ressort 14 est en compression entre la collerette 20 et un épaulement d'appui 26 formé sur la surface interne du corps creux 2.

La cartouche 12 peut également comprendre un ergot 21 qui lorsque ladite cartouche 12 est dans l'état verrouillé se trouve dans une fente de la bague d'accrochage afin de lui imposer une contrainte se traduisant par un écartement supérieur à un écartement à l'état libre de ladite bague d'accrochage 6 ([Fig.7]).

De manière avantageuse, un joint 22 peut venir s'intercaler entre la bague d'accrochage 6 et la collerette 20 afin d'assurer une étanchéité de connexion entre le tube et le dispositif de raccordement. Le joint 22 peut également assurer une fonction de butée contre laquelle la bague d'accrochage 6 bute dans le sens d'insertion tant que la cartouche n'est pas dans son état de connexion (il est entendu sans qu'il soit nécessaire de le préciser que le joint 22 bute contre la collerette de la cartouche). Cet aspect est notamment illustré à la [Fig.1], à la [Fig.3] et à la [Fig.4]. En particulier, tel qu'illustré à la [Fig.1] et à la [Fig.3], la cartouche 12 est dans l'état verrouillé. Lors de son insertion par l'ouverture, le tube T traverse (en force) la bague d'accrochage sans induire de coulissement de cette dernière tant qu'il n'est pas en butée contre la butée terminale 18 de la cartouche 12. A la [Fig.4], la cartouche 12 est dans l'état de connexion et autorise donc un mouvement d'ensemble selon le sens d'insertion du tube, de la bague d'accrochage en prise avec le tube, et de la cartouche.

Le dispositif de raccordement peut également comprendre un anneau cache poussière 23 placé sur ou dans l'ouverture 4 et dans lequel est formée une lumière permettant l'insertion du tube T dans le logement 3.

Selon ce mode de réalisation particulier, et tel qu'illustrée à la [Fig.5], l'anneau cache poussière 23 est disposé en amont de la première butée selon le sens d'insertion. Plus particulièrement, l'anneau cache poussière 23 est en prise avec le corps creux 2 par encliquetage.

Toujours de manière avantageuse, un autre joint torique 27 est disposé dans le logement 3 en amont de la première butée 7 selon le sens d'insertion u.

La première butée 7 peut comprendre un anneau au moins partiellement encastré dans l'anneau cache poussière 23.

La [Fig.8] est une représentation schématique d'un dispositif de raccordement 1 selon un autre mode de réalisation. Notamment, cet autre mode reprend pour l'essentiel les éléments décrits précédemment mais ne comprend toutefois pas de moyen de verrouillage conforme au mode de réalisation précédemment décrit.

Plus particulièrement, selon cet autre mode de réalisation, la bague d'accrochage 6 et la cartouche 12 sont agencées pour adopter un état, dit état d'engagement, dans lequel la bague d'accrochage 6, qui est fendue, se voit imposer, par la cartouche 12, un état contraint se traduisant par un écartement, dit deuxième écartement, supérieur à son écartement à l'état libre dit premier écartement.

La cartouche 12 et la bague d'accrochage 6 sont agencées pour que le passage de l'état d'engagement vers l'état de connexion de la cartouche 12 soit induit par l'insertion de la longueur prédéterminée D de tube T de manière à faire coulisser la cartouche 12 selon le sens d'insertion et mettre la bague d'accrochage 6 en prise avec le tube T.

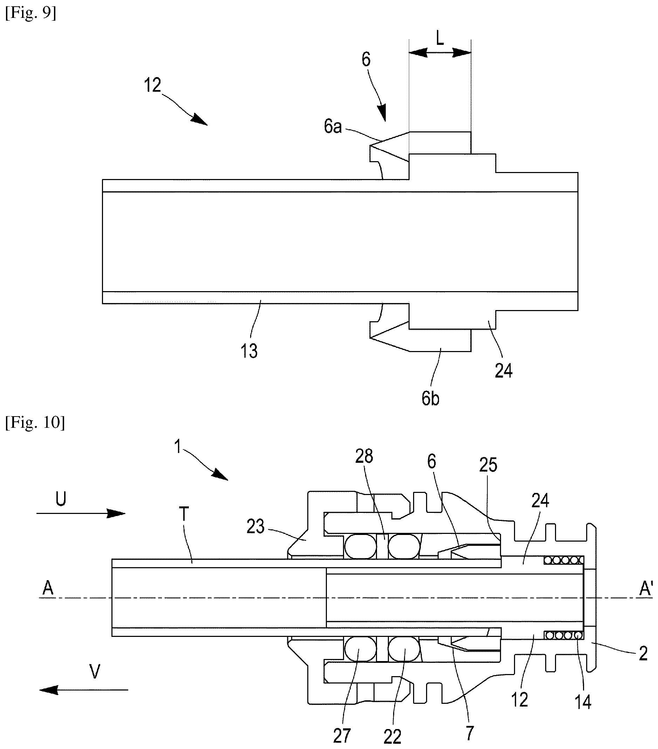

A cet égard, la cartouche 12 peut comprendre un collet 24 formé autour du manchon 13, tandis que la bague d'accrochage 6 comprend, dans le sens d'insertion u, une première section 6a et une deuxième section 6b ([Fig.9]).

Il est entendu que le collet 24 prend la forme d'un anneau formé autour du manchon 13.

La première section 6a porte la section intérieure 8 effilée permettant de griffer la surface extérieure du tube, et ainsi être en prise avec ce dernier.

La deuxième section 6b, qui s'étend sur une longueur L, est destinée à coopérer avec le collet pour se voir imposer le deuxième écartement lorsque la cartouche est dans l'état d'engagement.

Ainsi, tel qu'illustré à la [Fig.8] et à la [Fig.9], dès lors que la cartouche 12 est dans l'état engagé, le collet 24 est inséré par coulissement dans la deuxième section 6b de la bague d'accrochage 6 afin d'imposer à cette dernière le deuxième écartement.

La surface interne 5 du corps creux comprend, dans le sens d'insertion u, une première partie d'un premier diamètre et une deuxième partie d'un deuxième diamètre, inférieur au premier diamètre, de manière à former un épaulement d'engagement 25 et contre lequel la deuxième section 6b est destinée à buter lors du passage de l'état d'engagement vers l'état de connexion de la cartouche, afin de libérer la bague d'accrochage.

Ainsi, lors de son insertion selon le sens d'insertion u, le tube T exerce un effort contre le collet 24 conduisant à un coulissement de la cartouche 12. Ce coulissement, dans la mesure où la bague d'accrochage 6 est en butée contre la butée d'engagement 25, se traduit par un désengagement du collet 24 de la deuxième section 6b de la bague d'engagement 6. Plus particulièrement, le désengagement complet du collet 24 dans la deuxième section 6b est effectif après un coulissement de la cartouche sur une longueur L ([Fig.10]).

Dès lors que le désengagement du collet 24 de la deuxième section 6b est complet, le bague d'accrochage 6 n'est plus contrainte par ledit collet et se trouve ainsi en prise avec le tube T. En d'autres termes la cartouche 12 se trouve dans l'état connecté.

Selon cet autre exemple de réalisation, le ressort 14 exerce son effort contre le collet 24. Plus particulièrement, le ressort 14 est en compression entre le collet 24 et l'épaulement d'appui 26 formé sur la surface interne du corps creux 2.

Toujours selon cet autre exemple, l'anneau cache poussière 23 est en prise par encliquetage extérieur au corps creux 2. En d'autres termes, l'anneau cache poussière 23 vient coiffer l'ouverture du logement.

En outre, le joint 22 et l'autre joint 27 sont disposés en amont de la première butée. A cet égard, le joint 22 et l'autre joint 27 peuvent être séparés par un anneau, dit anneau de séparation 28.

Quel que soit l'exemple considéré, le dispositif de raccordement 1 permet une vérification du bon raccordement d'un tube dans des environnements exigus et sombres. Par ailleurs cette vérification peut être exécutée de manière répétée et autant de fois que nécessaire sans pour autant affecter la qualité du raccordement.

En outre, le dispositif de raccordement 1 peut être adapté pour compenser l'effet de biseau résultant d'une coupe non droite (non orthogonale) de l'extrémité de tube. En d'autres termes, l'état connecté de la cartouche peut n'intervenir que lorsqu'une longueur donnée du tube a effectivement traversé la bague d'accrochage.

Bien sûr, l'invention n'est pas limitée aux exemples de réalisation décrits et on peut y apporter des variantes de réalisation sans sortir du cadre de l'invention tel que défini par les revendications.

### Références

[1] WO2021148737A1 ;
[2] FR3021089A1 ;
[3] EP2249072A1 ;
[4] JPH0735281A.

## Revendications

1. Dispositif de raccordement (1) d'un tube, comprenant :
- un corps creux (2) définissant un logement (3) qui comprend une ouverture (4) par laquelle un tube est destiné à être inséré par coulissement selon un sens d'insertion, le logement (3) est délimité par une surface interne (5) du corps creux (2), et qui présente une symétrie de révolution autour d'un axe principal parallèle au sens d'insertion ;
- une bague d'accrochage (6) disposée dans le logement (3) coaxialement au sens d'insertion et destinée à être en prise avec un tube inséré dans le logement (3) ;
- une première butée (7) disposée dans le logement (3) et en amont de la bague d'accrochage (6) selon le sens d'insertion, et contre laquelle ladite bague est susceptible de buter ;
- une cartouche (12) contre laquelle le tube, inséré d'une longueur prédéterminée et en prise avec la bague d'accrochage (6), est destiné à buter afin d'imposer à ladite cartouche (12) un état de connexion, la cartouche (12) dans l'état de connexion étant susceptible de coulisser entre une première et une deuxième position afin d'accompagner le coulissement du tube en prise avec la bague d'accrochage (6), le passage de la cartouche (12) de la deuxième vers la première position imposant au tube de coulisser selon un sens d'extraction, opposé au sens d'insertion, afin de mettre en butée la bague d'accrochage (6) contre la première butée (7), tandis que le passage de la cartouche (12) de la première vers la deuxième position autorise un coulissement du tube selon le sens d'insertion afin de mettre la bague d'accrochage (6) à distance de la première butée (7), la cartouche (12) comprenant un manchon (13) qui s'étend à partir d'une extrémité libre (12a) dans le sens d'insertion, et qui est destiné à assurer le guidage du tube lors de l'insertion de ce dernier dans le logement (3), le dispositif de raccordement (1) comprenant au moins un moyen de verrouillage, la cartouche (12) étant susceptible d'être maintenue, par le moyen de verrouillage, dans un état, dit état verrouillé, et dans lequel tout coulissement de la cartouche (12) vers la deuxième position est interdit, le passage de l'état verrouillé vers l'état de connexion étant induit par l'insertion, selon le sens d'insertion, d'une longueur de tube égale à la longueur prédéterminée ;
- un ressort (14) exerçant un effort contre la cartouche (12) selon le sens d'extraction afin d'imposer à la cartouche (12), dans l'état de connexion, d'adopter sa première position.

2. Dispositif de raccordement (1) selon la revendication 1, dans lequel le moyen de verrouillage comprend une deuxième butée (15) et un levier flexible (16), la deuxième butée (15) étant formée sur la surface interne (5), tandis que le levier flexible (16), porté par le manchon (13), s'étend de manière divergente par rapport au manchon (13) et comprend une extrémité, dite extrémité de blocage (17), destinée à buter contre la deuxième butée (15) lorsque la cartouche (12) est dans l'état verrouillé, le levier flexible (16) est par ailleurs configuré pour fléchir de manière convergente intérieurement au manchon (13) lors de l'insertion du tube afin de positionner l'extrémité de blocage (17) en retrait de la deuxième butée (15).

3. Dispositif de raccordement (1) selon la revendication 2, dans lequel le manchon (13) comprend une butée terminale (18), opposée à son extrémité libre (12a), contre laquelle le tube est destiné à buter dès lors qu'il est inséré dans le logement (3) d'une longueur au moins égale à la longueur prédéterminée.

4. Dispositif de raccordement (1) selon l'une des revendications 1 à 3, dans lequel la cartouche (12) comprend une chemise (19) mécaniquement solidaire du manchon (13) par une extrémité dudit manchon (13) opposée à l'extrémité libre (12a), la chemise (19) comprenant une collerette (20) contre laquelle le ressort (14) exerce son effort sur ladite cartouche (12).

5. Dispositif de raccordement (1) selon l'une des revendications 1 à 4, dans lequel la cartouche (12) comprend un ergot qui lorsque ladite cartouche (12) est dans l'état verrouillé se trouve dans une fente de la bague d'accrochage (6) afin de lui imposer une contrainte se traduisant par un écartement supérieur à un écartement à l'état libre de ladite bague d'accrochage (6).

6. Dispositif de raccordement (1) selon l'une des revendications 1 à 5, dans lequel un anneau cache poussière (23) est disposé dans l'ouverture (4), et en amont de la première butée (7) selon le sens d'insertion, avantageusement l'anneau cache poussière (23) est en prise avec le corps creux (2) par encliquetage.

7. Dispositif de raccordement (1) selon la revendication 6, dans lequel un joint torique est disposé dans le logement (3) en amont de la première butée (7) selon la sens d'insertion.

8. Dispositif de raccordement (1) selon la revendication 6 ou 7, dans lequel la première butée (7) forme un anneau au moins partiellement encastré dans l'anneau cache poussière (23).

9. Dispositif de raccordement (1) selon l'une des revendications 1 à 8, dans lequel un autre joint torique est également disposé en aval de la bague d'accrochage (6) selon le sens d'insertion.

10. Dispositif de raccordement (1) selon l'une des revendications 1 à 9, dans lequel la surface interne (5) du corps creux (2) comprend un épaulement de butée contre lequel le ressort (14) est en appui.

## Patentansprüche

1. Kupplungsvorrichtung (1) für ein Rohr, umfassend:
- einen Hohlkörper (2), der eine Aufnahme (3) definiert, die eine Öffnung (4) umfasst, durch die ein Rohr gleitend in einer Einführrichtung eingeführt werden soll, wobei die Aufnahme (3) durch eine Innenfläche (5) des Hohlkörpers (2) begrenzt ist und eine Rotationssymmetrie um eine Hauptachse parallel zur Einführrichtung aufweist;
- einen Einhakring (6), der in der Aufnahme (3) koaxial zur Einführrichtung angeordnet ist und dazu bestimmt ist, mit einem in die Aufnahme (3) eingeführten Rohr in Eingriff zu kommen;
- einen ersten Anschlag (7), der in der Aufnahme (3) und in Einführrichtung vor dem Einhakring (6) angeordnet ist und an den der Ring anstoßen kann;
- eine Patrone (12), gegen die das Rohr, das um eine vorbestimmte Länge eingeführt ist und mit dem Einhakring (6) in Eingriff steht, anstoßen soll, um der Patrone (12) einen Verbindungszustand aufzuzwingen, wobei die Patrone (12) im Verbindungszustand zwischen einer ersten und einer zweiten Position gleiten kann, um das Gleiten des Rohrs, das mit dem Einhakring (6) in Eingriff steht, zu begleiten, der Durchgang der Patrone (12) von der zweiten in die erste Position das Rohr zwingt, in einer Ausziehrichtung entgegengesetzt zur Einführrichtung zu gleiten, um den Einhakring (6) gegen den ersten Anschlag (7) anzustoßen, während der Übergang der Patrone (12) von der ersten in die zweite Position ein Verschieben des Rohrs in der Einführrichtung zulässt, um den Einhakring (6) von dem ersten Anschlag (7) zu beabstanden, wobei die Patrone (12) eine Hülse (13) umfasst, die sich von einem freien Ende (12a) in der Einführrichtung erstreckt, und die dazu bestimmt ist, die Führung des Rohrs beim Einführen desselben in die Aufnahme (3) zu gewährleisten, wobei die Kupplungsvorrichtung (1) mindestens ein Verriegelungsmittel umfasst, wobei die Patrone (12) durch das Verriegelungsmittel in einem Zustand gehalten werden kann, der als verriegelter Zustand bezeichnet wird, und wobei jegliches Gleiten der Patrone (12) in die zweite Position verhindert wird, wobei der Übergang von dem verriegelten Zustand zu dem Verbindungszustand durch das Einführen einer Rohrlänge, die gleich der vorbestimmten Länge ist, in der Einführrichtung induziert wird;
- eine Feder (14), die eine Kraft gegen die Patrone (12) in der Herausziehrichtung ausübt, um zu bewirken, dass die Patrone (12) im verbundenen Zustand ihre erste Position einnimmt.

2. Kupplungsvorrichtung (1) nach Anspruch 1, wobei die Verriegelungsmittel einen zweiten Anschlag (15) und einen flexiblen Hebel (16) umfassen, wobei der zweite Anschlag (15) an der Innenfläche (5) ausgebildet ist, während der flexible Hebel (16), der von der Hülse (13) getragen wird, sich divergierend von der Hülse (13) erstreckt, und ein Ende, das sogenannte Verriegelungsende (17), umfasst, das dazu bestimmt ist, an den zweiten Anschlag (15) anzustoßen, wenn sich die Patrone (12) im verriegelten Zustand befindet, der flexible Hebel (16) weiter so konfiguriert ist, um sich beim Einführen des Rohrs konvergierend innerhalb der Hülse (13) zu biegen, um das Verriegelungsende (17) vom zweiten Anschlag (15) zurückversetzt zu positionieren.

3. Kupplungsvorrichtung (1) nach Anspruch 2, wobei die Hülse (13) einen Endanschlag (18) gegenüber ihrem freien Ende (12a) umfasst, gegen den das Rohr anstoßen soll, sobald es in die Aufnahme (3) um eine Länge eingeführt wird, die mindestens gleich der vorbestimmten Länge ist.

4. Kupplungsvorrichtung (1) nach einem der Ansprüche 1 bis 3, wobei die Patrone (12) einen Mantel (19) umfasst, der mechanisch fest mit der Hülse (13) durch ein Ende der Hülse (13) verbunden ist, das dem freien Ende (12a) gegenüberliegt, wobei der Mantel (19) einen Kragen (20) umfasst, gegen den die Feder (14) ihre Kraft auf die Patrone (12) ausübt.

5. Kupplungsvorrichtung (1) nach einem der Ansprüche 1 bis 4, wobei die Patrone (12) einen Stift aufweist, der, wenn die Patrone (12) im verriegelten Zustand ist, in einem Schlitz des Einhakrings (6) liegt, um ihm eine Spannung aufzuprägen, die in einem Abstand resultiert, der größer als ein Abstand im freien Zustand des Einhakrings (6) ist.

6. Kupplungsvorrichtung (1) nach einem der Ansprüche 1 bis 5, wobei ein Staubabdeckring (23) in der Öffnung (4) angeordnet ist, und in Einführrichtung vor dem ersten Anschlag (7), wobei vorteilhafterweise der Staubabdeckring (23) mit dem Hohlkörper (2) durch Einrasten in Eingriff steht.

7. Kupplungsvorrichtung (1) nach Anspruch 6, wobei ein Dichtring in der Aufnahme (3) stromaufwärts des ersten Anschlags (7) in Einführrichtung angeordnet ist.

8. Kupplungsvorrichtung (1) nach Anspruch 6 oder 7, wobei der erste Anschlag (7) einen Ring bildet, der zumindest teilweise in den Staubabdeckring (23) eingebettet ist.

9. Kupplungsvorrichtung (1) nach einem der Ansprüche 1 bis 8, wobei ein weiterer Dichtring auch stromabwärts des Einhakrings (6) in der Einführrichtung angeordnet ist.

10. Kupplungsvorrichtung (1) nach einem der Ansprüche 1 bis 9, wobei die Innenfläche (5) des Hohlkörpers (2) eine Anschlagschulter umfasst, an der die Feder (14) anliegt.

## Claims

1. A device (1) for coupling a tube, comprising:
- a hollow body (2) defining a housing (3) which comprises an opening (4) through which a tube is intended to be inserted by sliding according to a direction of insertion, the housing (3) is delimited by an inner surface (5) of the hollow body (2), and which has a rotational symmetry about a main axis parallel to the direction of insertion;
- a locking ring (6) arranged in the housing (3) coaxially to the direction of insertion and intended to be engaged with a tube inserted into the housing (3);
- a first stop (7) arranged in the housing (3) and upstream of the locking ring (6) according to the direction of insertion, and against which said ring is able to abut;
- a cartridge (12) against which the tube, inserted by a predetermined length and engaged with the locking ring (6), is intended to abut in order to impose a connection state on said cartridge (12), the cartridge (12) in the connection state being able to slide between first and second positions in order to accompany the sliding of the tube engaged with the locking ring (6), the passage of the cartridge (12) from the second to the first position imposing on the tube to slide according to a direction of extraction, opposite to the direction of insertion, in order to stop the locking ring (6) against the first stop (7), whereas the passage of the cartridge (12) from the first to the second position enables a sliding of the tube according to the direction of insertion in order to place the locking ring (6) at a distance from the first stop (7), the cartridge (12) comprising a sleeve (13) which extends from a free end (12a) in the direction of insertion, and which is intended to ensure the guidance of the tube during the insertion of the latter into the housing (3), the coupling device (1) comprising at least one locking means, the cartridge (12) being able to be held, by the locking means, in a so-called locked state, and wherein any sliding of the cartridge (12) towards the second position is prohibited, the passage from the locked state towards the connection state being induced by the insertion, according to the direction of insertion, of a tube length equal to the predetermined length;
- a spring (14) exerting a force against the cartridge (12) according to the direction of extraction in order to impose on the cartridge (12), in the connection state, to adopt its first position.

2. The coupling device (1) according to claim 1, wherein the locking means comprises a second stop (15) and a flexible lever (16), the second stop (15) being formed on the inner surface (5), whereas the flexible lever (16), carried by the sleeve (13), extends divergently with respect to the sleeve (13) and comprises an end, so-called the blocking end (17), intended to abut against the second stop (15) when the cartridge (12) is in the locked state, the flexible lever (16) is further configured to bend convergently inside the sleeve (13) during the insertion of the tube in order to position the blocking end (17) set back from the second stop (15).

3. The coupling device (1) according to claim 2, wherein the sleeve (13) comprises an end stop (18), opposite to its free end (12a), against which the tube is intended to abut as soon as it is inserted into the housing (3) by a length at least equal to the predetermined length.

4. The coupling device (1) according to one of claims 1 to 3, wherein the cartridge (12) comprises a liner (19) mechanically secured to the sleeve (13) by one end of said sleeve (13) opposite to the free end (12a), the liner (19) comprising a collar (20) against which the spring (14) exerts its force on said cartridge (12).

5. The coupling device (1) according to one of claims 1 to 4, wherein the cartridge (12) comprises a lug which, when said cartridge (12) is in the locked state, is in a slot of the locking ring (6) in order to impose a stress thereon resulting in a gap larger than a gap in the free state of said locking ring (6).

6. The coupling device (1) according to one of claims 1 to 5, wherein a dust cap ring (23) is arranged in the opening (4), and upstream of the first stop (7) according to the direction of insertion, advantageously the dust cap ring (23) is engaged with the hollow body (2) by snap-fitting.

7. The coupling device (1) according to claim 6, wherein an O-ring gasket is arranged in the housing (3) upstream of the first stop (7) according to the direction of insertion.

8. The coupling device (1) according to claim 6 or 7, wherein the first stop (7) forms a ring at least partially fitted into the dust cap ring (23).

9. The coupling device (1) according to one of claims 1 to 8, wherein another O-ring gasket is also arranged downstream of the locking ring (6) according to the direction of insertion.

10. The coupling device (1) according to any one of claims 1 to 9, wherein the inner surface (5) of the hollow body (2) comprises a stop shoulder against which the spring (14) bears.
